# FASCICULE DE BREVET EUROPEEN

(11) **EP 1 206 422 B1**
(45) Date de publication et mention de la délivrance du brevet: **06.11.2002**
(21) Numéro de dépôt: 00956615.9
(22) Date de dépôt: 03.08.2000
(51) Int. Cl.: C03B 25/08

(54) **PERFECTIONNEMENTS APPORTES AUX ETENDERIES DE RECUISSON DE VERRE PLAT**
VERBESSERUNGEN AN EINEN KÜHLOFEN FÜR FLACHGLAS
IMPROVED FLAT GLASS ANNEALING LEHRS

(30) Priorité: 19.08.1999 FR 9910644
(43) Date de publication de la demande: 22.05.2002
(73) Titulaire: STEIN HEURTEY, F-91130 Ris Orangis (FR)
(72) Inventeur: ALBRAND, Eric, F-91620 Nozay (FR); PASQUIER, Joel, F-77181 Courtry (FR); SEVIN, Daniel, F-78320 Le Mesnil Saint Denis (FR)
(74) Mandataire: Armengaud Ainé, Alain
(86) Numéro de dépôt international: FR0002242
(87) Numéro de publication internationale: WO01014270

(56) Documents cités:
- DE-A- 1 945 334
- FR-A- 1 386 743
- US-A- 3 000 109

## Description

La présente invention concerne des perfectionnements apportés aux étenderies de recuisson de verre plat.

On sait que les étenderies de verre plat sont des fours tunnels, munis de moyens de chauffage et de refroidissement contrôlés permettant de faire suivre au ruban de verre un cycle thermique de refroidissement continu.

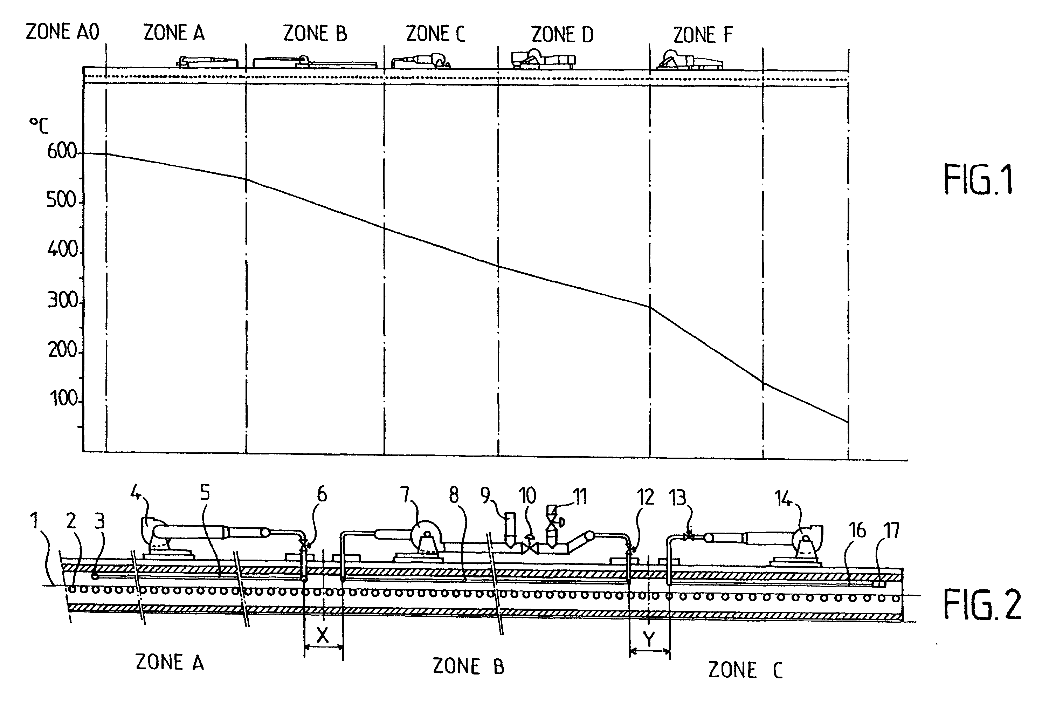

Une étenderie selon l'état actuel de la technique a été représentée de façon schématique sur les figures 1 et 2 des dessins annexés : la figure 1 représente les différentes zones composant cette étenderie ainsi que la courbe du cycle thermique de recuisson du verre qui en résulte et la figure 2 est une coupe par un plan vertical longitudinal de cette étenderie.

En se référant aux figures 1 et 2, on voit que les zones composant l'étenderie sont généralement définies de la façon suivante :

| | |
|---|---|
| Zone AO | zone d'entrée spéciale pour traitement particulier, |
| Zone A | zone de prérecuisson, |
| Zone B | zone de recuisson, |
| Zone C | zone de post-recuisson, |
| Zone D | zone de refroidissement direct tempéré, |
| Zone F | zone de refroidissement direct final. |

Les Zones A, B, C sont des zones à échange radiatif et les zones D et F sont des zones de refroidissement à échange convectif.

La phase la plus critique du cycle de recuisson du ruban de verre se situe dans les zones A et B dans lesquelles le verre est dans un état viscoélastique permettant la relaxation des contraintes générées dans le ruban de verre durant les opérations de formage de ce dernier. Un mauvais contrôle du refroidissement du ruban de verre dans ces zones peut créer des gradients de température dans le verre qui vont générer des contraintes pouvant subsister sous la forme de contraintes résiduelles.

En se référant à la figure 2 sur laquelle, dans cette étenderie selon la technique antérieure, seuls les échangeurs de chaleur situés au-dessus du ruban de verre 1 sont représentés (les moyens de chauffage ainsi que les échangeurs situés sous le ruban de verre ne sont pas représentés sur cette figure), on a représenté en 2 le système de rouleaux mécanisés qui supporte et entraîne le ruban de verre 1 qui circule au travers de l'étenderie.

Dans la zone A, un ventilateur 4 aspire l'air extérieur à température ambiante, au travers d'un collecteur 3 qui alimente plusieurs groupes d'échangeurs 5 couvrant la surface du ruban de verre 1. L'échangeur 5 est constitué d'un certain nombre de groupes de tubes de section circulaire, rectangulaire ou autre, disposés sur la largeur du ruban de verre afin de faire varier le refroidissement sur la largeur de ce ruban. Le débit d'air aspiré dans chaque groupe de tubes échangeurs 5 est régulé par l'intermédiaire d'une série de vannes telles que 6 qui sont implantées en amont ou en aval de chaque groupe de tubes échangeurs 5 et dont la valeur d'ouverture permet l'ajustement du débit d'air de refroidissement en fonction de l'objectif de température fixé en fin de la zone A.

Dans la zone B, un ventilateur 7 recircule l'air dans plusieurs groupes de tubes échangeurs 8 répartis sur la largeur du ruban de verre 1. La température de l'air recirculé dans les groupes d'échangeurs 8 peut être ajustée en prévoyant un échappement d'air chaud au travers du collecteur 9 et par le réglage de vannes telles que 10 et 11 contrôlant la dilution d'air ambiant dans l'air recirculé. Le débit d'air circulant au travers de chaque groupe d'échangeurs 8 peut être ajusté par l'intermédiaire de vannes telles que 12 qui sont implantées en amont ou en aval de chaque groupe de tubes échangeurs 8 et dont la valeur d'ouverture permet d'ajuster le débit d'air de refroidissement en fonction de l'objectif de température fixé en fin de cette zone B.

Dans la zone C, un ventilateur 14 aspire l'air extérieur à température ambiante au travers d'un collecteur 17 qui alimente plusieurs groupes de tubes échangeurs 16 couvrant la surface du ruban de verre 1. Le débit d'air aspiré dans chaque groupe d'échangeurs 16 est régulé par l'intermédiaire d'une série de vannes telles que 13 implantées en amont ou en aval de chaque groupe de tubes échangeurs 16, en fonction de l'objectif de température en fin de cette zone C.

L'ensemble des températures d'air et des débits d'air circulant dans les groupes d'échangeurs des zones A, B et C est contrôlé par un système de régulation commandant chaque vanne telle que 6, 10, 11, 12 et 13, à partir des informations transmises par des capteurs de température qui sont implantés en fin de chaque zone et sur la largeur du ruban de verre.

L'examen de la figure 2 fait ressortir que les impératifs d'implantation des traversées de la voûte de l'étenderie par les gaines de connection des tubes échangeurs à la jonction des zones A et B et des zones B et C, l'encombrement des vannes telles que 6, 12, 13, ainsi que la nécessité de prévoir des moyens de compensation de la dilatation des tubes échangeurs (non représentés sur la figure) imposent la séparation des groupes d'échangeurs des zones A, B et C par des distances désignées par les références X, Y sur la figure 2 et appelées inter-zones. La longueur des inter-zones est généralement de l'ordre de 1,5 mètres.

On constate que sur la distance des inter-zones X et Y le ruban de verre n'est pas soumis au rayonnement contrôlé des échangeurs. Il est donc évident que son refroidissement n'est pas contrôlé pendant le temps nécessaire à la traversée de ces inter-zones par le ruban de verre. En conséquence, la courbe de température ne présente pas un profil régulier durant le passage du ruban de verre au travers de ces inter-zones X et Y. Le verre, dans ces inter-zones se situe à un niveau de température qui correspond à un état viscoélastique critique. Cette non-régularité de la courbe de refroidissement du ruban de verre génère des contraintes dans ce dernier qui peuvent subsister jusqu'à la fin du refroidissement sous la forme de contraintes résiduelles.

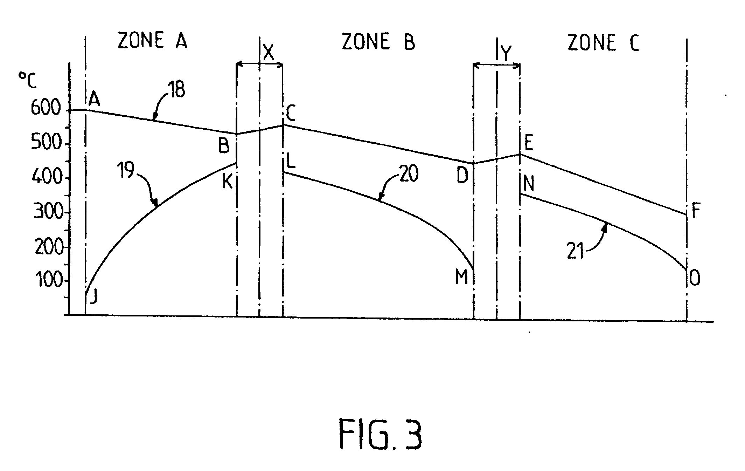

Sur la figure 3 des dessins annexés, on a représenté les températures du ruban de verre et de l'air circulant dans les tubes échangeurs des zones A, B et C ainsi que sur la longueur des inter-zones X et Y. La courbe 18 montre l'évolution de la température de peau du ruban de verre et les courbes 19, 20 et 21 celle de la température de l'air circulant dans les tubes échangeurs de chaque zone.

La température de peau du ruban de verre (courbe 18) décroît entre les entrées et sorties des zones A, B et C :

| | |
|---|---|
| Pour la Zone A | entre les points A et B ; |
| Pour la Zone B | entre les points C et D ; |
| Pour la Zone C | entre les points E et F. |

L'examen des courbes 19, 20 et 21 montre que la température de l'air circulant dans les tubes échangeurs :

| | |
|---|---|
| Pour la Zone A | croît entre les points J et K ; |
| Pour la Zone B | croît entre les points M et L ; |
| Pour la Zone C | croît entre les points O et N. |

Les inter-zones X et Y n'étant pas contrôlées, il s'y produit une augmentation de la température de peau du ruban de verre. Ces augmentations de température sont représentées par la courbe 18 :
L'inter-zone Zone A et Zone B, entre les points B et C,
L'inter-zone Zone B et Zone C, entre les points D et E.

Ce manque de contrôle de l'échange aux inter-zones X et Y perturbe la courbe de refroidissement du ruban de verre dans une gamme de températures correspondant au domaine viscoélastique, ce qui peut entraîner l'apparition de contraintes dont une partie subsistera après total refroidissement, au détriment de la qualité du verre produit.

On comprend que la différence de température du verre dans les inter-zones X et Y, pour un réglage donné de l'étenderie, sera plus ou moins importante en fonction de l'épaisseur du ruban de verre ou en fonction de sa vitesse de défilement dépendant de la production de la ligne.

La présente invention se propose d'apporter une solution au problème technique mentionné ci-dessus en supprimant la discontinuité dans la courbe de recuisson du ruban de verre, générée par la présence des inter-zones X et Y dans les étenderies selon l'état actuel de la technique, ceci afin d'améliorer de façon notable la qualité du produit fini.

En conséquence la présente invention concerne une étenderie de recuisson de verre plat munie de moyens de chauffage et de refroidissement contrôlés comportant notamment des zones de précuisson, de recuisson, de post-recuisson à échange radiatif et des zones de refroidissement direct tempéré et de refroidissement direct final à échange convectif, lesdites zones étant munies respectivement de groupes d'échangeurs de chaleur à air de refroidissement situés au-dessus et ou au-dessous du ruban de verre, caractérisée en ce qu'elle comporte :
- un collecteur unique d'aspiration d'air de refroidissement pour les groupes d'échangeurs des zones de prérecuisson et de recuisson, situé à la jonction desdites zones et
- un collecteur unique d'aspiration d'air de refroidissement pour les groupes d'échangeurs des zones de recuisson et de post-recuisson, situé à la jonction desdites zones.

Selon une mode de réalisation préférée de la présente invention, le collecteur unique situé à la jonction des zones de recuisson et de post-recuisson peut être réalisé sous la forme d'une gaine séparée verticalement en deux sections sur lesquelles se raccordent les groupes d'échangeurs de la zone de recuisson et ceux de la zone de post-recuisson.

Selon une autre mode de réalisation préférée de la présente invention l'étenderie comprend un système de contrôle de la température de l'air de refroidissement à l'aspiration de la zone de recuisson et au refoulement de la zone de post-cuisson, cette possibilité de régulation de l'étenderie permettant une optimisation des températures de l'air de refroidissement circulant dans les groupes d'échangeurs ce qui permet d'obtenir la courbe idéale de refroidissement du ruban de verre traversant l'étenderie. Ce résultat est obtenu selon l'invention qu'elles que soient l'épaisseur du ruban de verre et la production de la ligne.

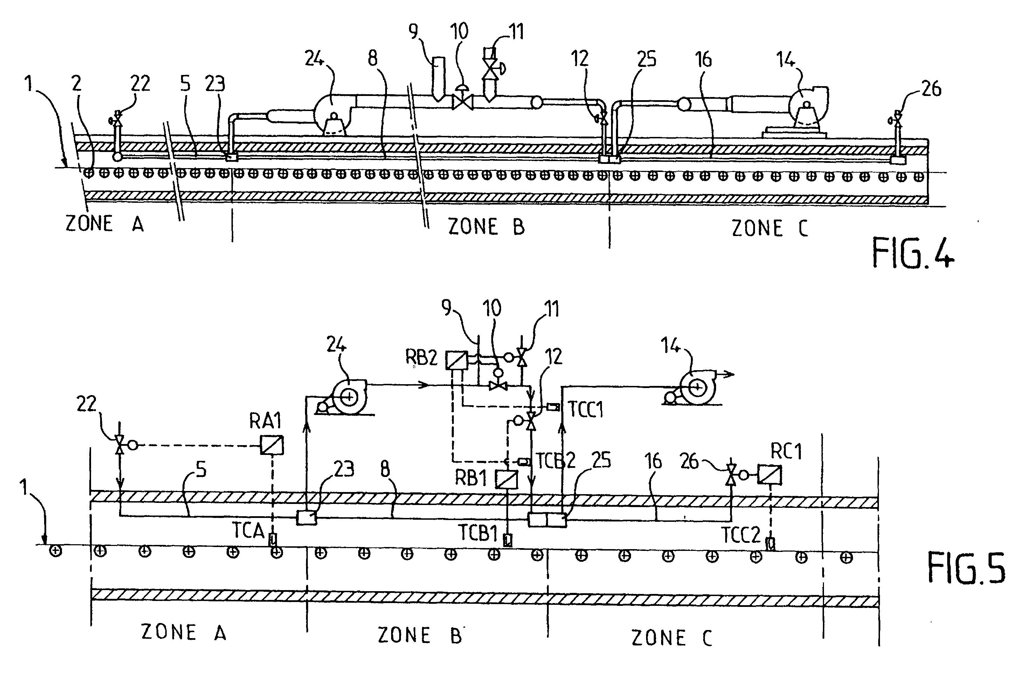

D'autres caractéristiques et avantages de la présente invention ressortiront de la description faite ci-après en référence aux figures 4 et 5 des dessins annexés sur lesquels :
- la figure 4 est une représentation schématique similaire à la figure 2 d'une étenderie de recuisson de verre plat munie des perfectionnements objet de la présente invention et
- la figure 5 illustre le système de contrôle prévu sur l'étenderie illustrée par la figure 4.

On se réfère en premier lieu à la figure 4 qui illustre un mode de réalisation préféré mais non limitatif de l'objet de l'invention. Sur cette figure on retrouve les zones A, B et C de la figure 2 ainsi que les différents éléments constituant les systèmes d'échanges radiatifs, décrits ci-dessus, ces éléments étant affectés des mêmes références que celles utilisées sur la figure 2.

Selon la présente invention, le ventilateur de la zone A a été supprimé et les tubes des groupes d'échangeurs 5 ont été raccordés à un collecteur unique 23. De la même façon les tubes échangeurs 8 de la zone B sont également reliés à ce même collecteur 23, ce dernier étant situé à la jonction des zones A et B. Le collecteur 23 est connecté à l'aspiration d'un ventilateur 24, implanté par exemple sur la zone B et qui assure l'aspiration de l'air circulant dans les tubes échangeurs 5 de la zone A et dans les tubes échangeurs 8 de la zone B.

Grâce à cette disposition, on supprime l'inter-zone X, à la jonction des zones A et B dans les étenderies selon la technique antérieure, dans laquelle le refroidissement du ruban de verre 1 n'était pas assuré correctement. Ainsi grâce à l'invention, le contrôle de la courbe de refroidissement du ruban de verre est continu, ce qui supprime tout risque d'apparition de contraintes supplémentaires dans le verre, susceptibles de subsister dans le produit fini.

Afin de supprimer la discontinuité de recuisson dans l'inter-zone Y entre les zones B et C des installations selon la technique antérieure, l'invention prévoit un collecteur unique 25 d'aspiration d'air de refroidissement pour les groupes d'échangeurs des zones B et C, ce collecteur unique 25 étant situé à la jonction des zones B et C. Selon la présente invention, ce collecteur peut être réalisé sous la forme d'une gaine séparée verticalement dans sa section par une cloison, et sur laquelle viennent se connecter, du côté de la zone B, les groupes d'échangeurs 8 et, du côté de la zone C, les groupes d'échangeurs 16.

Grâce à cette disposition, on peut obtenir un lissage parfait de la courbe de recuisson du ruban de verre sur toute la plage de températures pour laquelle ce ruban se trouve dans un état viscoélastique critique et pour laquelle il est exposé à un échange radiatif dans les zones A, B et C caractérisé par :

| | |
|---|---|
| Pour la zone A | échange antiméthodique : courant parallèle à air froid l'air circule dans les groupes d'échangeurs parallèlement au sens d'avance du ruban de verre ; |
| Pour la zone B | échange méthodique : contre-courant à air chaud recirculé, l'air circule dans les groupes d'échangeurs en sens inverse du sens d'avance du ruban de verre ; |
| Pour la zone C | échange méthodique : contre-courant à air froid, l'air circule dans les groupes d'échangeurs en sens inverse au sens d'avance du ruban de verre. |

L'invention vise également un système de contrôle et de régulation qui est illustré sur la figure 5. Ce système présente les caractéristiques suivantes

### Zone A :

On prévoit un ou plusieurs capteurs de température constitués par exemple de thermocouples tels que TCA, situés en fin de zone A qui mesurent la température du ruban de verre à la sortie de cette zone. Ces capteurs de température sont connectés à un régulateur de température RA1 ayant comme consigne la température souhaitée en fin de zone A et qui agissent sur une série de vannes motorisées 22, régulant le débit d'air froid circulant dans chacun des groupes de tubes échangeurs 5 de cette zone.

### Zone B :

Cette dernière comporte également un ou plusieurs capteurs de température, constitués par exemple de thermocouples tels que TCB1 situés en fin de zone B, qui mesurent la température du ruban de verre à la sortie de cette zone. Ces capteurs de température sont connectés à un régulateur de température RB1 ayant comme consigne la température souhaitée en fin de zone B et qui agissent sur une série de vannes motorisées 12 régulant le débit d'air recirculé dans chaque groupe d'échangeurs 8 de cette zone.

Cette zone comporte en outre des moyens pour contrôler et réguler la température de l'air de recirculation traversant les groupes d'échangeurs 8. Ces moyens sont constitués de capteurs de température, tels que des thermocouples TCB2, implantés dans les gaines d'entrées des groupes d'échangeurs 8 et un régulateur de température RB2 auxquels sont connectés les capteurs de température et qui reçoit sa consigne de température d'un thermocouple TCC1 implanté dans la gaine d'aspiration du ventilateur 14 de la zone C afin de réguler la température de l'air à l'entrée des échangeurs 8 par l'intermédiaire des vannes de régulation 10 et 11.

Comme dans l'étenderie illustrée par la figure 3, pour l'étenderie présentée par la figure 4, la température de l'air recirculé dans les groupes d'échangeurs 8 est ajustée par un échappement d'air au travers du collecteur 9 et par le réglage des vannes 10 et 11 contrôlant la dilution d'air ambiant dans l'air recirculé.

### Zone C :

Cette zone comporte également un ou plusieurs capteurs de température tels que par exemple des thermocouples TCC2, situés en fin de zone C afin de mesurer la température du ruban de verre en sortie de cette zone. Ces capteurs de température sont connectés à un régulateur de température RC1 ayant comme consigne la température souhaitée de fin de zone C et agissant sur une série de vannes motorisées 26 régulant le débit d'air recirculé dans chaque groupe d'échangeurs 16 de cette zone C.

Les mesures de températures opérées par l'ensemble des capteurs de température de chacune des zones concernées permettent au système de contrôle de l'étenderie d'adapter les températures et les débits d'air dans les échangeurs de chaque zone de façon à obtenir une courbe de température du ruban de verre semblable à la courbe théorique de recuisson.

Chaque groupe d'échangeurs disposés transversalement sur le ruban de verre dans chacune des zones A, B et C permet de contrôler le refroidissement de ce ruban sur sa largeur, par exemple pour favoriser le refroidissement de son centre par rapport à ses rives.

Selon la présente invention, les régulateurs mis en oeuvre dans ce système de contrôle peuvent être de type classique ou bien être intégrés dans un système de régulation mettant en oeuvre des algorithmes de type logique floue ou neuro-prédictifs.

Il demeure bien entendu que la présente invention n'est pas limitée aux exemples de réalisation décrits et/ou représentes mais qu'elle en englobe toutes les variantes. Ainsi, il est évident pour l'homme du métier que le dispositif objet de l'invention, dont l'application a été décrite ci-dessus pour des échangeurs positionnés au-dessus du ruban de verre peut non seulement s'appliquer uniquement à ceux-ci, mais également, conjointement aux échangeurs situés au-dessus et au-dessous du ruban de verre.

## Revendications

1. Etenderie de recuisson de verre plat munie de moyens de chauffage et de refroidissement contrôlés comportant notamment des zones de prérecuisson (A), de recuisson (B), de post-recuisson (C) à échange radiatif, lesdites zones étant munies respectivement de groupes d'échangeurs de chaleur à air de refroidissement situés au-dessus et ou au-dessous du ruban de verre, **caractérisée en ce qu'**elle comporte :
- un collecteur unique (23) d'aspiration d'air de refroidissement pour les groupes d'échangeurs des zones de prérecuisson (A) et de recuisson (B), situé à la jonction desdites zones et
- un collecteur unique (25) d'aspiration d'air de refroidissement pour les groupes d'échangeurs des zones de recuisson (B) et de post-recuisson (C), situé à la jonction desdites zones.

2. Etenderie selon la revendication 1, **caractérisée en ce que** le collecteur unique (25) situé à la jonction des zones de recuisson (B) et de post-recuisson (C) est réalisé sous la forme d'une gaine, séparée verticalement en deux sections sur lesquelles se raccordent les groupes d'échangeurs (8) de la zone de recuisson (B) et ceux (16) de la zone de post-recuisson (C).

3. Etenderie selon l'une des revendications 1 ou 2, **caractérisée en ce qu'**elle comporte un ventilateur unique (24) implanté dans la zone (B) qui assure l'aspiration de l'air circulant dans les groupes d'échangeurs (5) de la zone (A) et dans les groupes d'échangeurs (8) de la zone (B).

4. Etenderie selon l'une quelconque des revendications précédentes **caractérisée en ce qu'**elle comporte un système de contrôle de la température de l'air de refroidissement à l'aspiration de la zone (B) et au refoulement de la zone (C).

5. Etenderie selon la revendication 4, **caractérisée en ce que** ledit système de contrôle de température comporte :
- un ou plusieurs capteurs de température (TCA) situés en fin de zone de prérecuisson (A),
- un régulateur de température (RA1) auquel sont connectés les capteurs de température (TCA) et qui a comme consigne la température désirée de fin de zone (A),
- une pluralité de vannes motorisées (22) actionnées par ledit régulateur et qui régulent le débit d'air circulant dans chaque groupe d'échangeurs (8) de la zone (A),
- un ou plusieurs capteurs de température (TCB1) situés en fin de zone de recuisson (B),
- un régulateur de température (RB1) auquel sont connectés lesdits capteurs de températures (TCB1) et qui a pour consigne la température désirée de fin de zone (B),
- une pluralité de vannes motorisées (12) actionnées par ledit régulateur (RB1) et qui régulent le débit d'air recirculé dans chaque groupe d'échangeurs (8) de ladite zone (B) ;
- un système de contrôle de la température de l'air de recirculation traversant les échangeurs (8) de ladite zone de recuisson (B) et qui comprend un ou plusieurs capteurs de température (TCB2) implantés dans les gaines d'entrées desdits échangeurs, un régulateur de température (RB2) recevant sa consigne de température d'un capteur de température (TCC1) implanté dans la gaine d'aspiration desdits échangeurs (8) et régulant la température de l'air à l'entrée desdits échangeurs par l'intermédiaire de vannes de régulation (10,11) ;
- un ou plusieurs capteurs de température (TCC2) en fin de zone de post-recuisson (C) ;
- un régulateur de température (RC1) auquel sont connectés lesdits capteurs de température (TCC2) et ayant comme consigne la température souhaitée en fin de zone (C) et
- une pluralité de vannes motorisées (26) régulant le débit d'air recirculé dans les échangeurs (16) de ladite zone (C).

6. Etenderie selon la revendication 5, **caractérisée en ce que** ledit système de contrôle de température, à partir de mesures de températures effectuées par l'ensemble desdits capteurs de température de chacune desdites zones (A, B et C) adapte les températures et les débits d'air dans les échangeurs desdites zones de manière à obtenir une courbe de température du ruban de verre semblable à la courbe théorique de recuisson.

7. Etenderie selon l'une des revendications 5 ou 6, **caractérisée en ce que** lesdits régulateurs sont intégrés dans un système centralisé de régulation mettant en oeuvre des algorithmes du type logique floue.

8. Etenderie selon l'une des revendications 5 ou 6, **caractérisée en ce que** lesdits régulateurs sont intégrés dans un système centralisé de régulation mettant en oeuvre des algorithmes neuroprédictifs.

## Claims

1. Flat glass annealing lehr provided with controlled heating and cooling means having in particular radiative exchange pre-annealing (A), annealing (B) and post-annealing (C) areas, said areas being provided respectively with cooling air heat exchanger groups situated above and/or below the ribbon of glass, **characterised in that** it has:
- a single cooling air intake manifold (23) for the exchanger groups of the pre-annealing (A) and annealing (B) areas, situated at the junction of said areas and
- a single cooling air intake manifold (25) for the exchanger groups of the annealing (B) and post-annealing (C) areas, situated at the junction of said areas.

2. Lehr according to Claim 1, **characterised in that** the single manifold (25) situated at the junction of the annealing (B) and post-annealing (C) areas is implemented in the form of a duct, separated vertically into two sections to which the exchanger groups (8) of the annealing area (B) and those (16) of the post-annealing area (C) are connected.

3. Lehr according to either of Claims 1 or 2, **characterised in that** it has a single fan (24) installed in the area (B) which provides the intake of the air circulating in the exchanger groups (5) of the area (A) and in the exchanger groups (8) of the area (B).

4. Lehr according to any one of the preceding claims, **characterised in that** it has a system for controlling the temperature of the cooling air at the intake of the area (B) and at the discharge of the area (C).

5. Lehr according to Claim 4, **characterised in that** said temperature control system has:
- one or more temperature sensors (TCA) situated at the end of the pre-annealing area (A);
- a temperature regulator (RA1) to which the temperature sensors (TCA) are connected and which has as its set point the temperature desired at the end of the area (A);
- a plurality of motorised valves (22) operated by said regulator and which regulate the flow of air circulating in each exchanger group (8) of the area (A);
- one or more temperature sensors (TCB1) situated at the end of the annealing area (B);
- a temperature regulator (RB1) to which said temperature sensors (TCB1) are connected and which has as its set point the temperature desired at the end of the area (B);
- a plurality of motorised valves (12) operated by said regulator (RB1) and which regulate the flow of recirculated air in each exchanger group (8) of said area (B);
- a system for controlling the temperature of the recirculation air passing through the exchangers (8) of said annealing area (B) and which comprises one or more temperature sensors (TCB2) installed in the input ducts of said exchangers, a temperature regulator (RB2) receiving its temperature set point from a temperature sensor (TCC1) installed in the intake duct of said exchangers (8) and regulating the temperature of the air at the input of said exchangers by means of control valves (10, 11);
- one or more temperature sensors (TCC2) at the end of the post-annealing area (C);
- a temperature regulator (RC1) to which said temperature sensors (TCC2) are connected and having as its set point the temperature desired at the end of the area (C) and
- a plurality of motorised valves (26) regulating the flow of recirculated air in the exchangers (16) of said area (C).

6. Lehr according to Claim 5, **characterised in that** said temperature control system, from temperature measurements made by all said temperature sensors of each of said areas (A, B and C), adapts the temperatures and air flows in the exchangers of said areas so as to obtain a temperature curve for the ribbon of glass similar to the theoretical annealing curve.

7. Lehr according to either of Claims 5 or 6, **characterised in that** said regulators are integrated into a centralised control system using algorithms of the fuzzy logic type.

8. Lehr according to either of Claims 5 or 6, **characterised in that** said regulators are integrated into a centralised control system using neuropredictive algorithms.

## Patentansprüche

1. Kühlofen zum Spannungsfreiglühen von Flachglas mit Mitteln zum geregelten Aufheizen und Abkühlen, umfassend insbesondere Bereiche zum Vor-Kühlen (A), zum Kühlen (B) und zum Nach-Kühlen (C) unter Strahlungswärmeaustausch, wobei die besagten Bereiche jeweils mit Gruppen von Kühlluft-Wärmetauschern versehen sind, die oberhalb und / oder unterhalb des Glasbandes angeordnet sind, **dadurch gekennzeichnet, dass** er umfasst
- einen einzigen Sammler (23) zum Ansaugen von Kühlluft für die Gruppen von Wärmetauschern des Vor-Kühlbereichs (A) und des Kühlbereichs (B), der im Übergang zwischen besagten Bereichen angeordnet ist, und
- einen einzigen Sammler (25) zum Ansaugen von Kühlluft für die Gruppen von Wärmetauschern des Kühlbereichs (B) und des Nach-Kühlbereichs (C), der im Übergang zwischen besagten Bereichen angeordnet ist.

2. Kühlofen nach Anspruch 1, **dadurch gekennzeichnet, dass** der einzige Sammler (25) im Übergang zwischen dem Kühlbereich (B) und dem Nach-Kühlbereich (C) in Form einer Hülle ausgeführt ist, die vertikal in zwei Abschnitte getrennt ist, mit deren einem Abschnitt die Gruppen von Wärmetauschern (8) des Kühlbereichs (B) und mit deren anderem diejenigen des Nach-Kühlbereichs (C) verbunden sind.

3. Kühlofen nach einem der Ansprüche 1 oder 2, **dadurch gekennzeichnet, dass** er einen einzigen Ventilator (24) umfasst, der in den Bereich (B) eingesetzt ist und die Ansaugung der in den Gruppen von Wärmetauschern (5) des Bereichs (A) und in den Gruppen von Wärmetauschern (8) des Bereichs (B) strömenden Luft sicherstellt.

4. Kühlofen nach einem der vorstehenden Ansprüche, **dadurch gekennzeichnet, dass** sie ein System zum Regeln der Temperatur der Kühlluft an der Absaugung des Bereichs (B) und am Rückstau des Bereichs (C) umfasst.

5. Kühlofen nach Anspruch 4, **dadurch gekennzeichnet, dass** besagtes Temperaturregelsystem umfasst:
- einen oder mehrere am Ende des Vor-Kühlbereichs (A) angeordnete Temperatursensoren (TCA);
- einen Temperaturregler (RA1), an den die Temperatursensoren (TCA) angeschlossen sind und der als Einstellwert die Solltemperatur am Ende des Bereichs (A) hat;
- eine Anzahl von angetriebenen und vom besagten Regler (RA1) betätigbaren Ventilen (22), die den Durchsatz von in jeder Gruppe von Wärmetauschern (8) des besagten Bereichs (A) strömender Luft regehl;
- einen oder mehrere am Ende des Kühlbereichs (B) angeordnete Temperatursensoren (TCB1);
- einen Temperaturregler (RB1), an den die besagten Temperatursensoren (TCB1) angeschlossen sind und der als Einstellwert die Solltemperatur am Ende des Bereichs (B) hat;
- eine Anzahl von angetriebenen und vom besagten Regler (RB1) betätigbaren Ventilen (12), die den Durchsatz von in jeder Gruppe von Wärmetauschern (8) des besagten Bereichs (B) rückgeführter Luft regeln;
- ein System zum Regeln der Temperatur der die Wärmetauscher (8) des besagten Kühlbereichs (B) durchströmenden rückgeführten Luft, das einen oder mehrere in die Einlasshüllen der besagten Wärmetauscher eingesetzte Temperatursensoren (TCB2) sowie einen Temperaturregler (RB2) umfasst, der seinen Temperatur-Einstellwert von einem in die Ansaughülle der besagten Wärmetauscher (8) eingesetzten Temperatursensor (TCC1) erhält und die Temperatur der Luft am Einlass der besagten Wärmetauscher mittels Regelventilen (10, 11) regelt;
- einen oder mehrere am Ende des Nach-Kühlbereichs (C) angeordnete Temperatursensoren (TCC2);
- einen Temperaturregler (RC1), an den die besagten Temperatursensoren (TCC2) angeschlossen sind und der als Einstellwert die Solltemperatur am Ende des Bereichs (C) zu regeln hat, und
- eine Anzahl von angetriebenen Ventilen (26), die den Durchsatz von in den Wärmetauschern (16) des besagten Bereichs (C) umgewälzter Luft regeln.

6. Kühlofen nach Anspruch 5, **dadurch gekennzeichnet, dass** besagtes Temperaturregelsystem ausgehend von durch die Gesamtheit der besagten Temperatursensoren jedes der besagten Bereiche (A, B und C) vorgenommenen Temperaturmessungen die Temperaturen und die Durchsätze der Luft in den Wärmetauschern der besagten Bereiche derart anpasst, dass eine Temperaturkurve des Glasbandes erhalten wird, die der theoretischen Kurve zum Spannungsfreikühlen ähnlich ist.

7. Kühlofen nach einem der Ansprüche 5 oder 6, **dadurch gekennzeichnet, dass** die besagten Regler in ein zentrales Regelsystem integriert sind, das Algorithmen des Typs "unscharfe Logik" (füzzy logic) anwendet.

8. Kühlofen nach einem der Ansprüche 5 oder 6, **dadurch gekennzeichnet, dass** die besagten Regler in ein zentrales Regelsystem integriert sind, das neuronale Algorithmen anwendet.
